# FASCICULE DE BREVET EUROPEEN

(11) **EP 3 062 172 B1**
(45) Date de publication et mention de la délivrance du brevet: **15.11.2017**
(21) Numéro de dépôt: 15156307.9
(22) Date de dépôt: 24.02.2015
(51) Int. Cl.: G04B 39/00, G02B 3/14

(54) **MONTRE ÉQUIPÉE D'UNE LOUPE**
ARMBANDUHR MIT LUPE
WATCH PROVIDED WITH A MAGNIFYING GLASS

(43) Date de publication de la demande: 31.08.2016
(73) Titulaire: The Swatch Group Research and Development Ltd., 2074 Marin (CH)
(72) Inventeur: Sagardoyburu, Michel, 2000 Neuchâtel (CH)
(74) Mandataire: Surmely, Gérard

(56) Documents cités:
- EP-A1- 0 693 718
- EP-A1- 2 295 498
- CH-A- 368 756
- JP-A- H 112 701
- JP-A- H0 588 004
- JP-A- S62 265 586
- JP-A- 2011 141 438
- US-A1- 2006 062 090

## Description

### Domaine technique

La présente invention concerne le domaine des montres ayant une loupe agencée au niveau d'un verre de montre pour grossir un affichage analogique d'une donnée quelconque, en particulier une donnée de calendrier, pour en faciliter la lecture ou pour agrandir un élément ou une partie du mouvement horloger ou du cadran.

### Arrière-plan technologique

Des montres équipées de loupe au niveau de leur verre pour grossir l'affichage du quantième sont connues depuis longtemps. Selon une première variante, la loupe est usinée dans le verre de montre. Le document CH368756 divulgue une telle loupe. Dans une autre variante, une lentille grossissante est collée sous la face intérieure du verre.

Une telle loupe est appréciée des utilisateurs car la taille du guichet et l'impression du quantième sont souvent de petites dimensions, notamment lorsque les quantièmes sont imprimés sur un seul anneau ou disque. Cependant, certains consommateurs considèrent qu'une loupe nuit à la beauté de la montre et pose donc un problème d'esthétique. En effet, une loupe donne souvent à la montre un aspect rétro. De plus, elle engendre une déformation optique du cadran dans une vision lointaine ou oblique.

Pour remédier à ce problème, des horlogers ont proposé des montres avec une 'grande date', aussi nommées montres à 'grand guichet', en référence au guichet prévu dans le cadran pour laisser apparaître le quantième. Une telle solution rend le mouvement horloger plus complexe et augmente donc son coût de production. De plus, un grand guichet occupe plus de place sur le cadran et le mécanisme associé est souvent relativement encombrant au niveau de la platine du mouvement horloger, de sorte que cette solution limite les possibilités d'agencement d'autres indicateurs. Finalement, certaines réalisations disposent la dizaine et l'unité du quantième sur deux niveaux différents, ce qui est généralement visible.

### Résumé de l'invention

La présente invention a pour but de résoudre les problèmes de l'art antérieur exposés ci-avant.

A cet effet, la présente invention a pour objet une montre comprenant un boîtier muni d'un verre de montre et un mouvement horloger logé dans ce boîtier, le verre de montre supportant un dispositif optique grossissant prévu pour visuellement grossir au moins momentanément au moins un élément du mouvement horloger visible au travers de ce verre de montre. Le dispositif optique grossissant comprend une lentille liquide à focale variable, laquelle est formée par une membrane élastique définissant une paroi inférieure d'une première partie d'un réservoir comprenant un liquide transparent. La membrane élastique est agencée sous le verre de montre et la première partie du réservoir est située entre cette membrane élastique et ce verre de montre. La lentille liquide est commutable entre un état non grossissant dans lequel la membrane élastique est sensiblement plane et au moins un état grossissant dans lequel cette membrane élastique présente un profil courbe. La montre comprend en outre un actionneur, agencé pour varier la pression du liquide transparent dans le réservoir, et des moyens de commande de l'actionneur. Cet actionneur et ses moyens de commande sont agencés de manière à pouvoir varier la focale de la lentille liquide et notamment commuter cette lentille liquide entre l'état non grossissant et l'état grossissant.

L'application nouvelle d'une lentille liquide à focale variable pour former une loupe de lecture d'une donnée quelconque, notamment de calendrier, dans une montre ou permettre une vision agrandie d'un élément d'un mouvement horloger visible au travers du verre de montre répond de manière élégante aux problèmes de l'art antérieur. En effet, lorsque l'utilisateur souhaite connaître par exemple le quantième, il lui suffit d'actionner les moyens de commande associés à l'actionneur pour qu'une loupe soit formée momentanément par la lentille liquide et grossisse le quantième. Une fois la lecture effectuée, la lentille liquide peut retourner à un état dans lequel sa membrane élastique est sensiblement plane. Dans ce dernier état inactif, il n'y a pas d'effet de loupe de sorte que la lentille liquide devient peu visible, voire quasi invisible selon un mode de réalisation préféré de l'invention.

D'autres caractéristiques particulières de l'invention seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 montre schématiquement en coupe une première variante d'un premier mode de réalisation d'une montre selon l'invention, avec la lentille liquide dans un état non grossissant;
- La Figure 2 est une vue similaire à celle de la Figure 1 avec la lentille liquide dans un état grossissant;
- La Figure 3 montre en coupe une deuxième variante plus perfectionnée du premier mode de réalisation, avec la lentille liquide dans un état non grossissant;
- La Figure 4 est une vue de dessus d'une structure en élastomère formant la lentille liquide de la montre de la Figure 3, cette vue correspondant à une coupe selon la ligne IV-IV de cette Figure 3;
- La Figure 5 est une vue de dessus, similaire à celle de la Figure 4, d'une variante de structure en élastomère définissant une pluralité de lentilles liquides ;
- La Figure 6 montre en coupe transversale un deuxième mode de réalisation d'une montre selon l'invention; et
- La Figure 7 est une coupe horizontale de la montre de la Figure 6 selon la ligne VII-VII de cette Figure 6.

### Description détaillée de l'invention

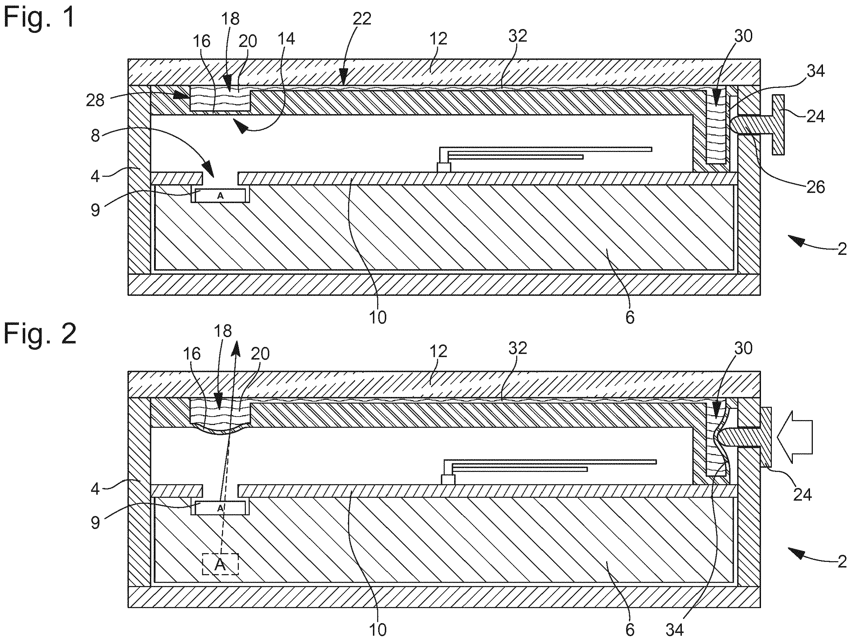

A l'aide des Figures 1 et 2 on décrira ci-après une première variante d'un premier mode de réalisation d'une montre selon l'invention, cette première variante étant représentée de manière schématique. La montre 2 comprend un boîtier 4 dans lequel est logé un mouvement horloger 6 avec un affichage analogique 8 d'une donnée de calendrier (notée 'A' dans le plan de coupe pour indiquer aux figures l'effet de l'invention, mais en réalité cette donnée de calendrier est imprimée sur la surface supérieure de l'anneau 9 et elle est visible au travers du guichet prévu dans le cadran 10). Ce boîtier comprend un verre de montre 12 agencé au-dessus de cet affichage analogique. Selon l'invention, cette montre comprend une lentille liquide 14 à focale variable qui est disposée, selon une variante particulière, à la perpendiculaire de l'affichage analogique 8. Cette lentille liquide permet de former par intermittence et sur commande une lentille optique grossissante pour lire la donnée de calendrier. A cet effet, la lentille liquide est formée par une membrane élastique 16 définissant une paroi inférieure d'une première partie 18 d'un réservoir dans lequel se trouve un liquide transparent 20. La lentille liquide est agencée sous le verre de montre, la membrane élastique étant éloignée de la face intérieure 22 de ce verre et la première partie du réservoir s'étendant entre la membrane élastique et ce verre.

Pour commuter la lentille liquide entre un état non grossissant (Fig.1) dans lequel la membrane élastique 16 est sensiblement plane et un état grossissant (Fig.2) où cette membrane élastique est courbe en réponse à une pression exercée sur le liquide transparent, la montre comprend en outre un poussoir 24 définissant conjointement un actionneur et des moyens de commande de cet actionneur. De manière générale, l'actionneur est agencé pour varier la pression du liquide transparent et les moyens de commande peuvent être activés par un utilisateur de la montre. Dans la variante schématique représentée aux Figures 1 et 2, l'actionneur et les moyens de commande sont donc formés par un seul bouton-poussoir qui est actionnable mécaniquement depuis l'extérieur du boîtier par un utilisateur. Dans d'autres variantes, l'actionneur et les moyens de commande sont distincts. Dans le cas d'un mouvement horloger mécanique, l'actionneur et les moyens de commande sont de préférence du type mécanique. Par contre, avec un mouvement électronique, on peut concevoir une variante où les moyens de commande sont du type électronique et l'actionneur est alors activé électriquement, par exemple par un moteur piézoélectrique. De manière générale, les moyens de commande peuvent être externes, comme décrits ci-avant, ou internes (par exemple un état prédéterminé du mouvement horloger).

Dans un mode de réalisation perfectionné, il est prévu un système anticollision avec les aiguilles de l'affichage analogique de la montre. Dans une première variante, un mécanisme empêchant l'activation de la lentille liquide est prévu si les aiguilles sont sous cette lentille liquide ou proches de celle-ci. Dans une deuxième variante, lorsqu'il y a risque de collision avec les aiguilles lors d'une activation de la lentille optique, il est prévu un mécanisme qui déplace momentanément la position de la ou des aiguilles concernée(s) avant de mettre la lentille liquide dans son état grossissant. La ou les aiguille(s) ainsi déplacée(s) sont ramenée(s) dans sa/leur position correcte une fois que la lentille liquide est à nouveau dans son état non grossissant.

Par 'membrane élastique', on comprend une membrane qui se déforme élastiquement de manière significative par exemple sous l'action d'une force exercée aisément par un doigt d'un utilisateur sur un piston pressant sur le liquide transparent. Dans une variante, la membrane élastique est sélectionnée de manière qu'elle puisse se déformer de manière à former sensiblement une demi-sphère (par exemple d'un rayon de trois à quatre millimètres) sous l'action d'une telle force sur une distance de un à deux millimètres.

Selon une caractéristique particulière, la première partie 18 du réservoir présente une paroi latérale 28 formée du même matériau que la membrane élastique et venue de matière avec cette membrane élastique. La paroi latérale 28 présente de préférence une épaisseur supérieure à l'épaisseur de la membrane élastique. Par épaisseur de la paroi latérale, on comprend la dimension parallèle au verre 12, car c'est cette dimension qui assure la rigidité de la paroi latérale. L'agencement de la première partie du réservoir est prévu pour qu'une variation de pression du liquide 20 ne déforme essentiellement que la membrane 16.

Selon une autre caractéristique particulière, le réservoir comprend une deuxième partie 30 agencée à la périphérie interne du boîtier 4. La première partie et la deuxième partie du réservoir sont reliées par un canal 32 agencé au moins partiellement sous le verre de montre et parallèle à celui-ci, ce canal ayant au moins une paroi formée du même matériau que la membrane élastique et venue de matière avec cette membrane élastique.

Selon d'autres caractéristiques particulières, la deuxième partie du réservoir est agencée sous une zone périphérique du verre de montre et le canal est entièrement agencé sous le verre de montre. Le canal a une paroi formée par le verre de montre, revêtue ou non d'une couche intermédiaire, et ses autres parois sont formées du même matériau que la membrane élastique et venues de matière avec cette membrane élastique. La deuxième partie du réservoir est également formée du même matériau que la membrane élastique et venue de matière avec cette membrane élastique.

Selon une autre caractéristique particulière, la deuxième partie 30 du réservoir présente une paroi élastiquement déformable 34, nommée aussi paroi élastique, et le poussoir 24 comprend un organe presseur 26 agencé en regard de cette paroi élastiquement déformable, de manière à pouvoir exercer une pression variable sur cette paroi élastique.

Selon une autre caractéristique particulière, la membrane élastique 16 est formée par un élastomère, en particulier du polydimethyl-siloxane (PDMS). L'indice de réfraction de ce matériau vaut environ 1.4. Dans une variante préférée, l'indice de réfraction du liquide transparent est sensiblement identique à celui de la structure en élastomère. Dans un premier exemple, le liquide transparent est constitué d'environ 60% de glycérol et 40% d'eau. Dans un deuxième exemple, le liquide transparent est constitué d'environ 73.5% d'éthylène glycol et 26.5% d'éthanol. D'autres mélanges peuvent être réalisés à partir de liquides de haut indice et de bas indice, ces liquides pouvant être sélectionnés de manière à ajuster également d'autres paramètres, notamment la viscosité.

Dans une variante préférée, la membrane élastique, les deux parties du réservoir et le canal qui les relient sont formés par une seule et même structure en élastomère et par le verre de montre. Il est prévu que seule la membrane élastique 16 de la première partie 18 du réservoir et la paroi élastique 34 de la deuxième partie 30 de ce réservoir se déforment sensiblement lorsque l'actionneur est activé pour augmenter la pression du liquide transparent 20. Cette pièce en élastomère peut être obtenue à l'aide d'un moule. Une fois l'élastomère polymérisé, on soumet de préférence la surface supérieure de la pièce, destinée à être collée contre la face intérieure 22 du verre, à un traitement plasma oxygène. Un tel traitement est également effectué sur la face intérieure du verre. Ensuite, on colle la structure en élastomère contre la face intérieure 22 et on remplit le réservoir ainsi formé par un liquide transparent. Une fois l'ouverture d'introduction du liquide scellée, on obtient une lentille liquide à focale variable. De préférence, à l'exception de la deuxième partie du réservoir, la pièce en élastomère définit une couche d'épaisseur constante, c'est-à-dire que la distance entre la face intérieure (22) du verre de montre et la surface inférieure (50) de cette couche est sensiblement constante. Dans une variante préférée, la couche en élastomère s'étend sous l'ensemble de la surface visible du verre de montre.

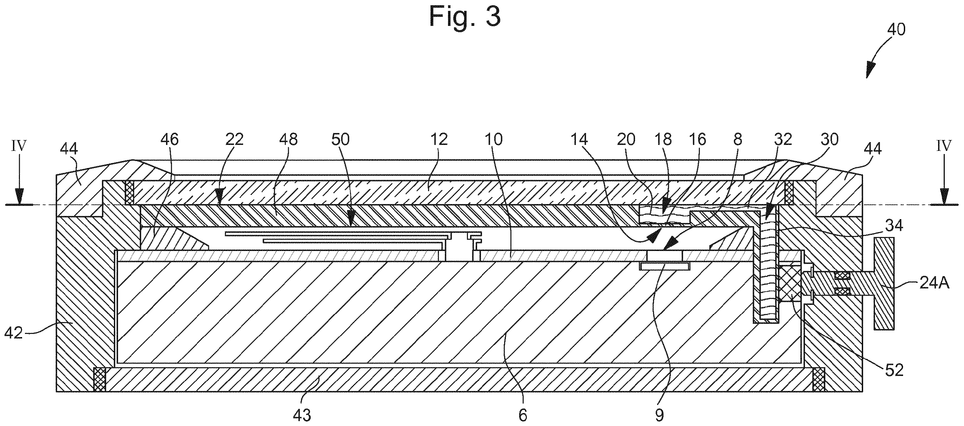

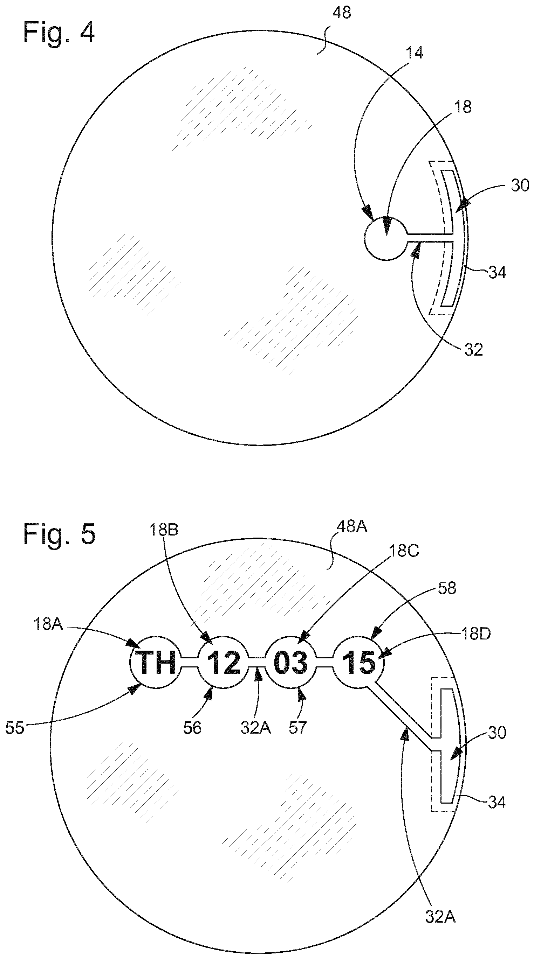

A l'aide des Figures 3 et 4, on décrira une deuxième variante du premier mode de réalisation décrit précédemment, cette deuxième variante étant plus perfectionnée que la première variante grâce à quelques caractéristiques additionnelles qui seront exposées ci-après. Les éléments déjà décrits précédemment ne seront pas à nouveau décrits en détails.

La montre 40 comprend un boîtier formé classiquement d'une carrure 42, un fond 43 et une lunette 44. Le réservoir de liquide transparent 20 comprend une première partie 18 formant la lentille liquide 14 et une deuxième partie 30 agencée sous une zone périphérique du verre de montre. La lentille liquide à focale variable avec son réservoir et le canal 32 reliant les première et deuxième parties 18 et 30 de ce réservoir sont formés par une seule et même structure 48 en élastomère collée sur la face intérieure 22 du verre de montre 12.

Cette deuxième variante est esthétiquement avantageuse par le fait que la deuxième partie 30 du réservoir est située sous la lunette 44 de la montre 40 et au moins partiellement derrière un rehaut 46 prévu entre le verre de montre 12 et le cadran 10, de sorte que cette deuxième partie n'est essentiellement pas visible au travers du verre de montre.

Selon une caractéristique préférée, la première partie 18 du réservoir et la membrane élastique 16, formant la lentille liquide en regard de l'affichage du quantième 8, sont formées dans une couche en élastomère de la structure 48, cette couche s'étendant sous l'ensemble de la surface visible du verre de montre 12 et présentant une surface plane du côté opposé à la face intérieure 22 de ce verre de montre. De plus, au moins la partie du canal 32 située sous la surface visible du verre 12 est agencée dans cette couche. Comme le verre de montre a ici une face intérieure plane, la couche en élastomère et le liquide transparent 20 situé dans la première partie 18 du réservoir et dans le canal 32 présentent une épaisseur constante sous la surface visible du verre de montre. En d'autres termes, il est prévu que la distance entre la face intérieure du verre et la surface inférieure 50 de la structure 48 soit sensiblement constante sous l'ensemble de la surface visible du verre de montre. Dans le cas d'un verre bombé, la couche en élastomère présente alors une surface inférieure et une surface supérieure parallèles et courbes. De plus, dans une variante avantageuse, le liquide transparent a un indice de réfraction sensiblement identique à celui de l'élastomère. Dans ce cas, lorsque la lentille liquide 14 est dans son état non grossissant (Fig. 3), la présence de cette lentille est invisible pour l'utilisateur de la montre. Ainsi, cette lentille devient visible seulement lorsque l'utilisateur actionne les moyens de commande (dans l'exemple représenté, le poussoir 24A) pour courber la membrane élastique 16 et obtenir un grossissement du quantième (état grossissant de la lentille liquide).

Dans cette deuxième variante, la montre 40 comprend un actionneur 52, agencé pour varier la pression du liquide transparent, et des moyens de commande 24A associés à l'actionneur et pouvant être activés par un utilisateur de la montre. La deuxième partie 30 du réservoir a une paroi élastique 34 et l'actionneur est formé par un organe presseur agencé en regard de cette paroi élastique.

A la Figure 5 est montré schématiquement, selon une coupe similaire à celle de la Figure 4, une structure en élastomère 48A selon une variante de réalisation dans laquelle il est prévu plusieurs lentilles liquides 55, 56, 57 et 58 formées chacune par une première partie distincte 18A, respectivement 18B, 18C & 18D du réservoir, comme décrit précédemment. Ces premières parties du réservoir sont toutes reliées à sa deuxième partie 30 sur la paroi élastique 34 de laquelle agit un actionneur. Les lentilles liquides peuvent être, comme représentées, reliées entre elles par un canal 32A, lequel relie aussi ces lentilles liquides à la deuxième partie du réservoir. Dans une autre variante, chaque lentille liquide peut être reliée à cette deuxième partie du réservoir par un propre canal. Ainsi, la focale des lentilles liquides est variée simultanément. Dans l'exemple représenté à la Figure 5, quatre lentilles liquides sont prévues pour grossir quatre indications de calendrier, à savoir le jour de la semaine, le quantième, le mois et l'année.

Selon une réalisation particulière, le mouvement horloger 6 est un mouvement mécanique. Le poussoir 24A est actionnable mécaniquement depuis l'extérieur du boîtier par l'utilisateur et associé à l'actionneur de manière que l'organe presseur presse sur la paroi élastique 34 et la déforme lorsqu'une pression est exercée sur le poussoir. On remarquera que la forme et le positionnement de la deuxième partie du réservoir peuvent être autres dans diverses variantes et que l'actionneur peut être plus complexe que celui représenté à la Figure 3. En particulier cet actionneur peut être formé de plusieurs parties avec une partie terminale définissant l'organe presseur.

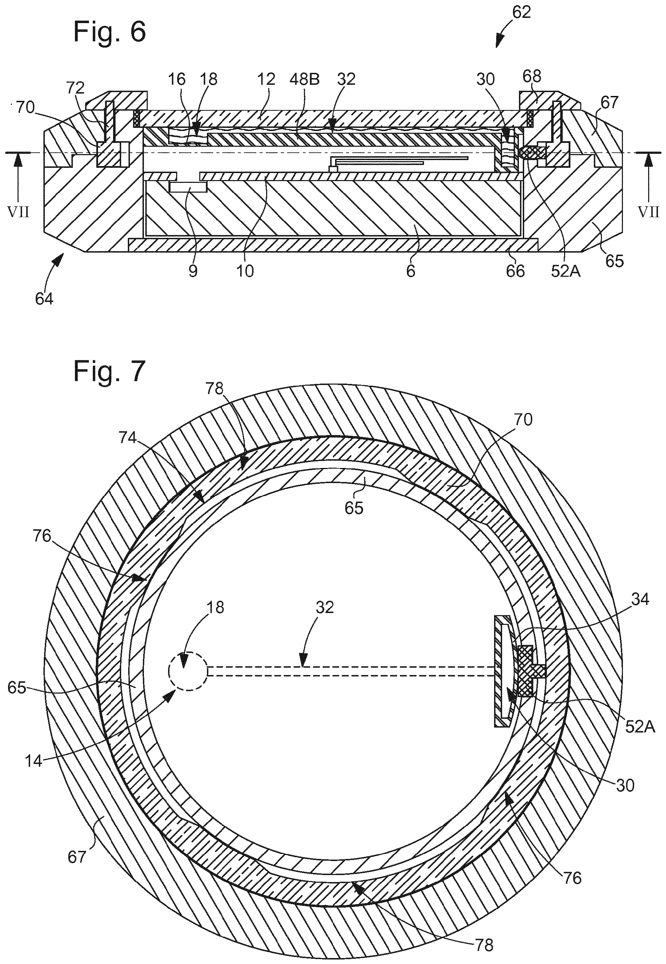

Aux Figures 6 et 7 est représenté schématiquement un deuxième mode de réalisation d'une montre 62 selon l'invention. Cette montre comprend un boîtier 64 formé d'une carrure 65 supportant le verre de montre 12, d'un fond 66 et d'une lunette fixe 67. Les références déjà décrites précédemment ne seront pas à nouveau décrites ici. Ce deuxième mode de réalisation se distingue du premier mode essentiellement par l'agencement des moyens de commande de l'actionneur. L'actionneur 52A est formé par un piston situé en regard d'une paroi élastique 34 de la deuxième partie 30 du réservoir de liquide transparent, comme décrit précédemment. Les moyens de commande de cet actionneur sont formés par une couronne tournante 68 reliée à une came circulaire 70 par des goupilles ou une bague annulaire 72. Le profil intérieur 74 de la came 70 définit au moins une partie saillante 76 prévue pour actionner le piston 52A en direction de la deuxième partie 30 du réservoir, de manière à enfoncer la tête de ce piston dans la paroi élastique 34 et augmenter ainsi la pression du liquide transparent pour obtenir la loupe souhaitée via la lentille liquide 14. La came circulaire présente ainsi au moins une partie saillante (dans l'exemple représenté à la Figure 7 il y en a quatre) qui permet de mettre la lentille liquide dans un état grossissant lorsque cette partie saillante est positionnée en face de l'actionneur 52A et au moins une partie circulaire 78 située en retrait de cette partie saillante et laissant la lentille liquide dans un état non grossissant lorsque cette partie circulaire est positionnée en face de l'actionneur. De préférence, le rayon de la partie circulaire 78 est sélectionné de manière que le piston 52A ait une position radiale correspondant à une pression dans le réservoir pour laquelle la membrane élastique 16 de la lentille liquide 14 est plane, c'est-à-dire non déformée. En actionnant en rotation la lunette tournante 68, un utilisateur peut ainsi faire passer la lentille liquide 14 d'un état grossissant (état actif) à un état non grossissant (état inactif).

De manière générale, la lunette tournante est reliée à au moins une came agencée de manière à activer la lentille liquide pour au moins une première position angulaire de cette lunette tournante et à laisser inactive cette lentille liquide pour au moins une deuxième position angulaire distincte de la première position angulaire. On remarquera que des variantes de réalisation ainsi que d'autres moyens de commande peuvent être envisagés par l'homme du métier. Par exemple, on peut prévoir la lunette tournante seulement entre deux positions angulaires, par exemple distantes de 60°, ces deux positions correspondant respectivement à un état actif et un état inactif de la lentille liquide. Dans une autre variante, on peut prévoir que la came presse directement sur la paroi élastique du réservoir de liquide transparent. On notera encore que la lunette tournante peut être utilisée en outre pour l'activation d'autres fonctions de la montre.

Dans les variantes de réalisation de l'invention décrites ci-avant, la lentille liquide forme une loupe pour grossir momentanément l'affichage du quantième visible au travers d'un guichet du cadran ou plus généralement des données de calendrier. Ceci n'est qu'une application particulière de l'invention. En effet, la lentille liquide peut être utilisée pour grossir par intermittence n'importe quelle information d'un affichage analogique, notamment à disque ou à aiguille, ou d'un affichage numérique. On peut ainsi grossir les indications d'un petit cadran à l'aide d'une pluralité de lentilles liquides reliées entre elles par un canal. Dans d'autres applications particulières, la lentille liquide sert à grossir momentanément une signature du mouvement horloger, une marque, un élément ou une partie de ce mouvement, notamment un rouage, un résonateur, un échappement, une pierre, une gravure, etc.

Finalement, une montre selon l'invention peut comporter plusieurs lentilles liquides indépendantes, c'est-à-dire chacune avec un propre réservoir. On peut prévoir un seul actionneur ou plusieurs actionneurs respectifs. De même, on peut prévoir plusieurs moyens de commande (par exemples plusieurs boutons-poussoirs) ou un seul et même moyen de commande (par exemple une lunette tournante agencée pour varier successivement la pression du liquide transparent dans les divers réservoirs et éventuellement pour activer plusieurs lentilles liquides simultanément dans une position angulaire donnée).

## Revendications

1. Montre (2, 42) comprenant un boîtier muni d'un verre de montre (12) et un mouvement horloger (6) logé dans ce boîtier, le verre de montre supportant un dispositif optique grossissant prévu pour visuellement grossir au moins momentanément au moins un élément du mouvement horloger visible au travers de ce verre de montre, **caractérisée en ce que** le dispositif optique grossissant comprend au moins une lentille liquide à focale variable (14), cette lentille liquide étant formée par une membrane élastique (16) qui définit une paroi inférieure d'une première partie (18) d'un réservoir comprenant un liquide transparent (20), la membrane élastique étant agencée sous ledit verre de montre et la première partie du réservoir étant située entre cette membrane élastique et ce verre de montre; **en ce que** la lentille liquide est commutable entre un état non grossissant dans lequel la membrane élastique est sensiblement plane et au moins un état grossissant dans lequel cette membrane élastique présente un profil courbe; et **en ce que** la montre comprend en outre un actionneur (26, 52), agencé pour varier la pression du liquide transparent dans le réservoir, et des moyens de commande (24, 24A) de l'actionneur, cet actionneur et ses moyens de commande étant agencés pour pouvoir varier la focale de la lentille liquide et notamment commuter cette lentille liquide entre ledit état non grossissant et ledit état grossissant.

2. Montre selon la revendication 1, **caractérisée en ce que** ledit élément du mouvement horloger forme un affichage analogique, ladite lentille liquide à focale variable étant disposée à la perpendiculaire de cet élément dudit affichage analogique.

3. Montre selon la revendication 1 ou 2 dans laquelle ladite lentille liquide à focale variable est une première lentille liquide, **caractérisée en ce que** ledit dispositif optique grossissant comprend en outre au moins une deuxième lentille liquide à focale variable formée de manière similaire à la première lentille liquide et associée audit réservoir de manière qu'une variation de la pression dudit liquide transparent par ledit actionneur engendre une variation de la focale de cette deuxième lentille.

4. Montre selon l'une quelconque des revendications précédentes, **caractérisée en ce que** ladite première partie du réservoir présente une paroi latérale formée du même matériau que ladite membrane élastique et venue de matière avec cette membrane élastique.

5. Montre selon la revendication 4, **caractérisée en ce que** le réservoir comprend une deuxième partie (30) agencée sous une zone périphérique dudit verre de montre; **en ce que** la première partie et la deuxième partie dudit réservoir sont reliées par un canal (32) agencé au moins partiellement sous le verre de montre de manière parallèle à celui-ci, ce canal ayant au moins une paroi formée du même matériau que ladite membrane élastique et venue de matière avec cette membrane élastique.

6. Montre selon la revendication 5, **caractérisée en ce que** la deuxième partie du réservoir est également formée du même matériau que ladite membrane élastique et venue de matière avec cette membrane élastique; **en ce que** cette deuxième partie présente une paroi élastique (34); et **en ce que** ledit actionneur comprend un organe presseur agencé en regard de la paroi élastique de manière à pouvoir exercer une pression variable sur cette paroi élastique.

7. Montre selon la revendication 5 ou 6, **caractérisée en ce que** la deuxième partie dudit réservoir est située sous une lunette (44) de cette montre et au moins partiellement derrière un rehaut (46) prévu entre le verre de montre et un cadran (10), de sorte que cette deuxième partie n'est essentiellement pas visible au travers du verre de montre.

8. Montre selon l'une quelconque des revendications précédentes, **caractérisée en ce que** ladite première partie dudit réservoir et ladite membrane élastique sont formés dans une couche en élastomère qui s'étend sous l'ensemble de la surface visible du verre de montre, la distance entre la face intérieure (22) du verre de montre et la surface inférieure (50) de cette couche étant sensiblement constante sous l'ensemble de la surface visible du verre de montre.

9. Montre selon la revendication 8, **caractérisée en ce que** ledit liquide transparent (20) a un indice de réfraction sensiblement identique à celui de l'élastomère.

10. Montre selon l'une quelconque des revendications précédentes, **caractérisée en ce que** ledit mouvement horloger est un mouvement mécanique, et **en ce que** lesdits moyens de commande sont formés par un organe de commande (24, 24A) actionnable mécaniquement depuis l'extérieur du boîtier par un utilisateur.

11. Montre selon la revendication 10, **caractérisée en ce que** ledit organe de commande est un bouton-poussoir.

12. Montre selon la revendication 10, **caractérisée en ce que** ledit organe de commande est une lunette tournante reliée à au moins une came agencée de manière à activer ladite lentille liquide pour au moins une première position angulaire de cette lunette tournante et à laisser inactive cette lentille liquide pour au moins une deuxième position angulaire distincte de la première position angulaire.

## Patentansprüche

1. Uhr (2, 42), umfassend ein Gehäuse, das mit einem Uhrenglas (12) versehen ist, und ein Uhrwerk (6), das in diesem Gehäuse angeordnet ist, wobei das Uhrenglas eine optische Vergrößerungsvorrichtung trägt, die dazu vorgesehen ist, zumindest vorübergehend mindestens ein Element des Uhrwerks, das durch dieses Uhrenglas sichtbar ist, visuell zu vergrößern, **dadurch gekennzeichnet, dass** die optische Vergrößerungsvorrichtung mindestens eine Flüssigkeitslinse (14) mit veränderlicher Brennweite umfasst, wobei diese Flüssigkeitslinse durch eine elastische Membran (16) gebildet ist, die eine untere Wand eines ersten Teils (18) eines Vorratsbehälters definiert, der eine lichtdurchlässige Flüssigkeit (20) enthält, wobei die elastische Membran unter dem Uhrenglas angeordnet ist und der erste Teil des Vorratsbehälters zwischen dieser elastischen Membran und diesem Uhrenglas angeordnet ist; dass die Flüssigkeitslinse zwischen einem nicht vergrößernden Zustand, in dem die elastische Membran im Wesentlichen eben ist, und mindestens einem vergrößernden Zustand, in dem diese elastische Membran ein gekrümmtes Profil aufweist, umschaltbar ist; und dass die Uhr ferner ein Stellglied (26, 52), das dafür ausgelegt ist, den Druck der lichtdurchlässigen Flüssigkeit in dem Vorratsbehälter zu verändern, und Mittel (24, 24A) zum Steuern des Stellglieds umfasst, wobei dieses Stellglied und diese Steuermittel dafür ausgelegt sind, die Brennweite der Flüssigkeitslinse verändern zu können und insbesondere diese Flüssigkeitslinse zwischen dem nicht vergrößernden Zustand und dem vergrößernden Zustand zu schalten.

2. Uhr nach Anspruch 1, **dadurch gekennzeichnet, dass** das Element des Uhrwerks eine analoge Anzeige bildet, wobei die Flüssigkeitslinse mit veränderlicher Brennweite senkrecht über diesem Element der analogen Anzeige angeordnet ist.

3. Uhr nach Anspruch 1 oder 2, wobei die Flüssigkeitslinse mit veränderlicher Brennweite eine erste Flüssigkeitslinse ist, **dadurch gekennzeichnet, dass** die optische Vergrößerungsvorrichtung ferner mindestens eine zweite Flüssigkeitslinse mit veränderlicher Brennweite umfasst, die ähnlich wie die erste Flüssigkeitslinse ausgebildet ist und dem Vorratsbehälter in einer Weise zugeordnet ist, dass eine Veränderung des Drucks der lichtdurchlässigen Flüssigkeit durch das Stellglied eine Veränderung der Brennweite dieser zweiten Flüssigkeitslinse hervorruft.

4. Uhr nach einem der vorhergehenden Ansprüche, **dadurch gekennzeichnet, dass** der erste Teil des Vorratsbehälters eine Seitenwand aufweist, die aus demselben Material wie die elastischen Membran und einteilig mit dieser elastischen Membran ausgebildet ist.

5. Uhr nach Anspruch 4, **dadurch gekennzeichnet, dass** der Vorratsbehälter einen zweiten Teil (30) umfasst, der unter einem Umfangsbereich des Uhrenglases angeordnet ist; dass der erste Teil und der zweite Teil des Vorratsbehälters durch einen Kanal (32) verbunden sind, der zumindest teilweise unter dem Uhrenglas und parallel hierzu angeordnet ist, wobei dieser Kanal mindestens eine Wand besitzt, die aus demselben Material wie die elastische Membran und einteilig mit dieser elastischen Membran ausgebildet ist.

6. Uhr nach Anspruch 5, **dadurch gekennzeichnet, dass** der zweite Teil des Vorratsbehälters ebenfalls aus demselben Material wie die elastische Membran und einteilig mit dieser elastischen Membran ausgebildet ist; dass dieser zweite Teil eine elastische Wand (34) aufweist; und dass das Stellglied ein Druckerzeugungsorgan umfasst, das gegenüber der elastischen Wand in einer Weise angeordnet ist, dass es auf diese elastische Wand einen veränderlichen Druck ausüben kann.

7. Uhr nach Anspruch 5 oder 6, **dadurch gekennzeichnet, dass** der zweite Teil des Vorratsbehälters unter einer Lünette (44) dieser Uhr und zumindest teilweise hinter einem Höhenring (46), der zwischen dem Uhrenglas und einem Zifferblatt (10) vorgesehen ist, angeordnet ist, derart, dass dieser zweite Teil durch das Uhrenglas hindurch größtenteils nicht sichtbar ist.

8. Uhr nach einem der vorhergehenden Ansprüche, **dadurch gekennzeichnet, dass** der erste Teil des Vorratsbehälters und die elastische Membran in einer Elastomerschicht gebildet sind, die sich unter der gesamten sichtbaren Oberfläche des Uhrenglases erstreckt, wobei der Abstand zwischen der Innenfläche (22) des Uhrenglases und der unteren Oberfläche (50) dieser Schicht unter der gesamten sichtbaren Oberfläche des Uhrenglases im Wesentlichen konstant ist.

9. Uhr nach Anspruch 8, **dadurch gekennzeichnet, dass** die lichtdurchlässige Flüssigkeit (20) einen Brechungsindex hat, der im Wesentlichen mit jenem des Elastomers übereinstimmt.

10. Uhr nach einem der vorhergehenden Ansprüche, **dadurch gekennzeichnet, dass** das Uhrwerk ein mechanisches Uhrwerk ist und dass die Steuermittel aus einem Steuerorgan (24, 24A) gebildet sind, das von außerhalb des Gehäuses durch einen Benutzer mechanisch betätigbar ist.

11. Uhr nach Anspruch 10, **dadurch gekennzeichnet, dass** das Steuerorgan ein Drückerknopf ist.

12. Uhr nach Anspruch 10, **dadurch gekennzeichnet, dass** das Steuerorgan eine drehende Lünette ist, die mit mindestens einem Nocken verbunden ist, der so beschaffen ist, dass er die Flüssigkeitslinse für mindestens eine erste Winkelposition dieser drehenden Lünette aktiviert und diese Flüssigkeitslinse für mindestens eine zweite Winkelposition, die von der ersten Winkelposition verschieden ist, inaktiv lässt.

## Claims

1. Watch (2, 42) comprising a case provided with a watch glass (12) and a watch movement (6) housed in this case, the watch glass supporting an optical magnifying device provided for visually magnifying, at least momentarily, at least one element of the watch movement which is visible through this watch glass, **characterised in that** the optical magnifying device comprises at least one liquid zoom lens (14), this liquid lens being formed by an elastic membrane (16) which defines a lower wall of a first part (18) of a reservoir comprising a transparent liquid (20), the elastic membrane being provided under said watch glass and the first part of the reservoir being situated between this elastic membrane and this watch glass; **in that** the liquid lens is switchable between a non-magnifying state in which the elastic membrane is substantially planar and at least one magnifying state in which this elastic membrane has a curved profile; and **in that** the watch comprises in addition an actuator (26, 52), provided in order to vary the pressure of the transparent liquid in the reservoir, and means (24, 24A) for controlling the actuator, this actuator and the control means thereof being provided in order to be able to vary the focal length of the liquid lens and in particular to switch this liquid lens between said non-magnifying state and said magnifying state.

2. Watch according to claim 1, **characterised in that** said element of the watch movement forms an analogue display, said liquid zoom lens being disposed perpendicular to this element of said analogue display.

3. Watch according to claim 1 or 2, in which said liquid zoom lens is a first liquid lens, **characterised in that** said optical magnifying device comprises furthermore at least one second liquid zoom lens formed similarly to the first liquid lens and connected to said reservoir so that a variation in pressure of said transparent liquid by said actuator causes a variation in the focal length of this second lens.

4. Watch according to any of the preceding claims, **characterised in that** said first part of the reservoir has a lateral wall which is formed of the same material as said elastic membrane and consists of a single piece with this elastic membrane.

5. Watch according to claim 4, **characterised in that** the reservoir comprises a second part (30) provided under a peripheral zone of said watch glass; **in that** the first part and the second part of said reservoir are connected by a channel (32) which is provided at least partially under the watch glass parallel to the latter, this channel having at least one wall which is formed of the same material as said elastic membrane and consists of a single piece with this elastic membrane.

6. Watch according to claim 5, **characterised in that** the second part of the reservoir is likewise formed of the same material as said elastic membrane and consists of a single piece with this elastic membrane; **in that** this second part has an elastic wall (34); and **in that** said actuator comprises a pressure element provided opposite the elastic wall so as to be able to exert a variable pressure on this elastic wall.

7. Watch according to claim 5 or 6, **characterised in that** the second part of said reservoir is situated under a bezel (44) of this watch and at least partially behind a raised part (46) provided between the watch glass and a dial (10) so that this second part is essentially not visible through the watch glass.

8. Watch according to any of the preceding claims, **characterised in that** said first part of said reservoir and said elastic membrane are formed in an elastomeric layer which extends under the entirety of the visible surface of the watch glass, the distance between the interior face (22) of the watch glass and the lower surface (50) of this layer being substantially constant under the entirety of the visible surface of the watch glass.

9. Watch according to claim 8, **characterised in that** said transparent liquid (20) has a refractive index substantially identical to that of the elastomer.

10. Watch according to any of the preceding claims, **characterised in that** said watch movement is a mechanical movement, and **in that** said control means are formed by a control element (24, 24A) which is actuatable mechanically from outside the case by a user.

11. Watch according to claim 10, **characterised in that** said control element is a push-button.

12. Watch according to claim 10, **characterised in that** said control element is a rotating bezel connected to at least one cam provided in order to activate said liquid lens for at least one first angular position of this rotating bezel and to leave this liquid lens inactive for at least one second angular position different from the first angular position.
